(19)
Europäisches
Patentamt
European
Patent Office
Office européen
des brevets

(11) **EP 2 693 544 A1**

(12) **EUROPEAN PATENT APPLICATION**
published in accordance with Art. 153(4) EPC

(43) Date of publication:
**05.02.2014 Bulletin 2014/06**

(51) Int Cl.:
*H01M 4/86* (2006.01)     *C04B 35/00* (2006.01)
*C04B 41/85* (2006.01)     *H01M 8/02* (2006.01)
*H01M 8/12* (2006.01)

(21) Application number: **12763835.1**

(22) Date of filing: **27.03.2012**

(86) International application number:
**PCT/JP2012/057978**

(87) International publication number:
**WO 2012/133438 (04.10.2012 Gazette 2012/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2011 JP 2011078514**

(71) Applicant: **National Institute of Advanced
Industrial Science
and Technology
Tokyo 100-8921 (JP)**

(72) Inventors:
• **SUZUKI, Toshio**
  **Nagoya-shi**
  **Aichi 463-8560 (JP)**

• **YAMAGUCHI, Toshiaki**
  **Nagoya-shi**
  **Aichi 463-8560 (JP)**
• **HAMAMOTO, Koichi**
  **Nagoya-shi**
  **Aichi 463-8560 (JP)**
• **FUJISHIRO, Yoshinobu**
  **Nagoya-shi**
  **Aichi 463-8560 (JP)**

(74) Representative: **Jansen, Cornelis Marinus et al
V.O.
Johan de Wittlaan 7
2517 JR Den Haag (NL)**

(54) **MEDIUM-TO-LOW-TEMPERATURE HIGH-EFFICIENCY ELECTROCHEMICAL CELL AND ELECTROCHEMICAL REACTION SYSTEM COMPRISING SAME**

(57)     The present invention is an electrochemical cell that achieves generation efficiency of 40% or more even in a medium-to-low-temperature region at or below 700°C, and a generation method in which the electrochemical cell is used. The electrochemical cell has a structure in which a fuel electrode having an interface with a fuel gas, a dense ion conductor (electrolyte) and an air electrode having an interface with air (oxygen) are layered in this order, the fuel electrode and the air electrode are not in contact with each other and are separated by the electrolyte, and a structure in which a functional layer having a porous structure and promoting electrochemical reactions is layered on part or all of the fuel electrode surface that is an interface with the fuel gas. The present invention allows providing a high-efficiency electrochemical reaction system that utilizes a gaseous hydrogen fuel and contributes to solving environmental and energy problems by significantly lowering resistance derived from internal diffusion of a gaseous hydrogen fuel gas in a fuel electrode, and by making it possible to achieve, at a single-cell level, a generation efficiency of 40% or more even in a medium-to-low-temperature region at or below 700°C.

Fig. 1

**Description**

TECHNICAL FIELD

The present invention relates to an electrochemical cell and to an electrochemical reaction system, such as a solid-oxide fuel cell system or the like, that is made up of the electrochemical cell. More particularly, the present invention relates to an electrochemical cell, and to an electrochemical reaction system in which high-efficiency generation when using a gaseous hydrogen fuel can be achieved in a medium-to-low-temperature region at or below 700°C through formation of a functional layer that promotes electrochemical reactions, at the surface of a fuel electrode of the electrochemical cell. The present invention provides a novel technology and a novel product relating to an electrochemical cell that is suitably used as a clean energy source or as environmental cleanup equipment, and relating to an electrochemical reaction system in which the above cell is utilized.

BACKGROUND ART

Solid oxide fuel cells (hereafter, "SOFCs") are typical  instances of electrochemical cells. Herein, SOFCs are electrochemical cells in which a solid oxide having oxide ion conductivity, such as zirconia or ceria, is used as an electrolyte. The basic structure of an SOFC includes ordinarily a three-layer configuration of air electrode - electrolyte - fuel electrode. The SOFC is used ordinarily in a temperature region ranging from 800 to 1000°C.

Upon supply of a fuel gas (hydrogen, carbon monoxide, a hydrocarbon or the like) to the fuel electrode of the SOFC, and supply of air (or oxygen) to the air electrode, a difference arises between the oxygen partial pressure on the air electrode side and the oxygen partial pressure on the fuel electrode side, and voltage that corresponds to the Nernst equation is generated across the electrodes as a result. Oxygen turns into oxide ions at the air electrode, the oxide ions move towards the fuel electrode via the solid electrolyte, and, upon reaching the fuel electrode, react with the fuel gas and release electrons. Accordingly, electricity can be extracted directly from the fuel cell if a load is connected to the fuel electrode and the air electrode. Theoretically, SOFCs afford power generation with high energy efficiency, and hence high expectations surround the practical application of SOFCs as next-generation power generation systems.

The operating temperature of SOFCs must be lowered in  order to promote the spread and commercialization of SOFCs. Inexpensive materials can used, and the startup time of SOFC systems can be shortened, which is expected to translate into more versatile SOFCs, through lowering of the operating temperature down to a medium-to-low-temperature region of 500 to 700°C. Thus far, SOFCs have been reported that have a fuel electrode support having high power output, of 0.8 to 1 W/cm$^2$, even in a medium-to-low-temperature region (at or below 700°C), by virtue of novel fuel electrode and air electrode materials that have been proposed, or through the use of improved electrode structures (Non-Patent Documents 1 to 3).

However, SOFCs of high power output reported thus far have been evaluated in single cells. Accordingly, the cells have been often evaluated under conditions of low generation efficiency, and not necessarily under practical conditions. In order to achieve high-efficiency generation, the fuel and air gas flow channels must be optimized in stacked/ modular structures resulting from stacking SOFCs. Most SOFCs that claim high-efficiency generation involve thus evaluation results of modular structures.

For instance, Patent Document 1 (paragraph [0046]) recites "the single cell of disc stack type passed a 100-thermal cycle test in a repeat test from room temperature to  1000°C. In particular, it was found that temperature distributions in the radial direction of the discs, for repetitions of startup and cooling, were uniform in all directions. It was likewise found that generation efficiency exceeded 50% in fuel cells having a generation unit that utilized a dual stack unit each of which was a stack of 50 discs" (herein, the term disc refers to plate-type SOFC single cells). High-efficiency generation in a medium-to-low-temperature region, at the single-cell level, is thus difficult, as made clear by the fact that high-temperature operation at 1000°C is required in order to achieve a generation efficiency of 50% using a dual structure being each a stack of as much as 50 discs.

High power output performance in single cells is found under conditions of low generation efficiency, but it is ordinary to achieve high generation efficiency (> 40%) by, for instance, optimizing the fuel gas flow channels in the stacks and modules of these cells, and, in addition, by resorting to a higher operating temperature (700°C or higher). Accordingly, lowering the operating temperature while achieving high generation efficiency mandates that cell performance be enhanced at the single-cell level. Increasing cell performance at the single-cell level has become thus a significant technical challenge.

Meanwhile, various approaches have been tried in order to lower the operating temperature when using a hydrocarbon fuel. For instance, the inventors have reported the possibility of direct use of methane fuel in a low temperature region, at or below 500°C, which was conventionally unfeasible in conventional instances, by coating a fuel electrode surface with a catalyst for reforming the hydrocarbon fuel (Patent Document 2, Non-Patent Document 4).

However, these reports focus on power generation simultaneously with reforming reactions of the hydrocarbon fuel (production of hydrogen inside the cells), and no consideration is given to reactions of a fuel that contains gaseous hydrogen and that is supplied from outside the SOFCs. Moreover, generation efficiency is not touched upon, and in particular, nothing is known regarding methods in which generation efficiency is enhanced by using a gaseous hydrogen fuel in a medium-to-low-temperature region. Therefore, increasing the generation efficiency of SOFCs while lowering the operating temperature thereof has become the most important problem, and the resolution thereof the most sought-after, in the technical field in question.

Patent Document 1: Japanese Patent Application Publication No. 2002-151106
Patent Document 2: Japanese Patent Application No. 2009-252492

Non-Patent Document 1: Z. Shao and S. M. Haile, Nature 431 170-173 (2004)
Non-Patent Document 2: T. Hibino, A. Hashimoto, K. Asano, M. Yano, M. Suzuki and M. Sano, Electrochem. Solid-Sate Lett., 5(11) A242-A244 (2002)
Non-Patent Document 3: T. Suzuki, Z. Hasan, Y. Funahashi, T. Yamaguchi, Y. Fujishiro and M. Awano, Science 325 852-855 (2009)
Non-Patent Document 4: T. Suzuki, T. Yamaguchi, K. Hamamoto, Y. Fujishiro, M. Awano, N. Sammes, Energy & Environmental Sci. 4, p. 940-943 (2011)

Such being the case, the inventors conducted diligent research, in the light of the above technical technologies, with a view to developing an electrochemical cell, as well as novel ways of using the electrochemical cell, that should allow reliably solving the above-described problems of conventional members. As a result, the inventors arrived at a novel finding to the effect that cell performance can be effectively increased, and polarization resistance derived from fuel gas diffusion can be significantly reduced, by arranging a functional layer that promotes electrochemical reactions, on a fuel electrode surface having an interface with a fuel gas, in an single electrochemical cell, so that, for instance, generation efficiency in a medium-to-low-temperature region can be significantly improved as a result. The inventors perfected the present invention, after further research, on the basis of the above novel finding.

DISCLOSURE OF THE INVENTION

It is an object of the present invention to provide a single electrochemical cell having high generation efficiency even in a medium-to-low-temperature region. It is a further object of the present invention to provide an electrochemical reaction system, such as a solid oxide fuel cell system, that utilizes the above electrochemical cell.
The present invention, which aims at solving the above problems, involves the following technical means.

(1) An electrochemical cell, which is a single electrochemical cell that utilizes a fuel containing gaseous hydrogen, comprising a structure where a fuel electrode having an interface with the fuel gas, a dense ion conductor (electrolyte) and an air electrode having an interface with air (oxygen) are layered in this order, the fuel electrode and the air electrode are not in contact with each other and are separated by the electrolyte, and a structure where a functional layer having a porous structure and promoting electrochemical reactions is layered on part or all of the fuel electrode surface that is an interface with the fuel gas,
wherein a generation efficiency $\eta$, calculated on the basis of the expression below, of 40% or more can be achieved at a cell temperature of 700°C or below

$$\text{Expression: } \eta = (\text{fuel utilization during operation}) \times (\text{operating voltage} /1.25).$$

(2) The electrochemical cell according to (1),
wherein the structural shape of the electrochemical cell has a support structure formed of a fuel electrode material;

1) the dense ion conductor (electrolyte) is layered on one face of the fuel electrode structure;
2) the air electrode is layered on the electrolyte, without coming into contact with the fuel electrode structure support; and

3) the functional layer that promotes electrochemical reactions is layered on a face having an interface with the fuel gas, without the electrolyte of the structure support formed of the fuel electrode material being layered.

(3) The electrochemical cell according to (1),wherein the structural shape of the electrochemical cell has a support structure formed of a fuel electrode material;

1) the dense ion conductor (electrolyte) is layered on one face of the fuel electrode structure;

2) the air electrode is layered on the electrolyte, without coming into contact with the fuel electrode structure support;

3) the functional layer that promotes electrochemical reactions is layered on a face having an interface with the fuel gas, without the electrolyte of the structure support formed of the fuel electrode material being layered; and

4) the electrochemical cell is configured such that an exposed section, at which the electrolyte and air electrode are absent and the fuel electrode is exposed, is present at the face to which air is supplied, and a fuel electrode collector section is provided at the site of the exposed section.

(4) The electrochemical cell according to (1) or (3), wherein the material of the functional layer having a porous structure, promoting electrochemical reactions and layered on a fuel electrode face having an interface with the fuel gas is made up of an element selected from among Ni, Cu, Fe, Sn, Pt, Pd, Au, Ru, Co, La, Sr, Ti, Ce, Al, Mg, Ca, Zr, Yb, Y, Sc, Si, W, V, Ti and Mo and/or an oxide compound containing one or more of these elements.

(5) The electrochemical cell according to (1) or (3), wherein the functional layer having a porous structure, promoting electrochemical reactions and layered on a fuel electrode face having an interface with the fuel gas is made up of $Ru\text{-}CeO_2$, $Pd\text{-}CeO_2$, $Cu\text{-}CeO_2$ or $Ni\text{-}CeO_2$.

(6) The electrochemical cell according to (1) or (3), wherein the electrolyte material is an oxide compound containing two or more elements selected from among Zr, Ce, Mg, Sc, Ti, Al, Y, Ca, Gd, Sm, Ba, La, Sr, Ga, Bi, Nb and W.

(7) The electrochemical cell according to (1) or (3), wherein the fuel electrode material is made up of an element selected from among Ni, Cu, Pt, Pd, Au, Ru, Co, La, Sr and Ti and/or an oxide compound containing one or more of these elements.

(8) The electrochemical cell according to (1) or (3), wherein the fuel electrode material is a composite material of the material according to (6) and the material according to (7).

(9) An electrochemical reaction system in which current is extracted as a result of an electrochemical reaction, the electrochemical reaction system comprising, as a constituent element, the electrochemical cell defined in (1) or (3), wherein an operating temperature of the electrochemical cell is at most 700°C.

(10) The electrochemical reaction system according to (9), wherein the electrochemical reaction system is formed of a module that utilizes a stack structure in which a plurality of the electrochemical cells is integrated.

(11) A generation method for generating power by using the electrochemical cell defined in (1) or (3), the method comprising the step of generating power using the electrochemical cell under conditions of generation efficiency, as defined according to (1), of 40% or more at or below 700°C using a fuel that contains gaseous hydrogen.

The invention is explained in more detail next.

The generation efficiency $\eta$ as defined in the present invention is given by Expression 1 below:

$$\text{Expression 1: } \eta = \text{(fuel utilization during operation)} \times \text{(operating voltage)} / 1.25.$$

In the expression, 1.25 (V) is the theoretical electromotive force calculated from the lower heating value (LHV) upon formation of water through reaction between gaseous hydrogen and oxygen, and the fuel utilization during operation can be calculated (in a case of gaseous hydrogen) according to Expression 2 on the basis of the fuel flow rate and operating current.

$$\text{Expression 2: (fuel utilization during operation)} = \text{(operating current)} / ((\text{gaseous hydrogen flow rate}) / 6.9)$$

In the expression, 6.9 (mL/min) denotes the flow rate of gaseous hydrogen necessary for obtaining 1 A of current. Therefore, the generation efficiency of the cell is determined by the current, voltage and gaseous hydrogen flow rate during operation.

The electrochemical cell of the present invention affords high efficiency of 40% or more, at or below 700°C, as the generation efficiency defined above. The electrochemical cell has a structure in which a fuel electrode having an interface with a fuel gas, a dense ion conductor (electrolyte), and an air electrode having an interface with air (oxygen), are layered in this order, the fuel electrode and the air electrode are not in contact with each other and are separated by the electrolyte, and a functional layer having a porous structure and promoting electrochemical reactions is layered on part or all of the fuel electrode surface that is the interface with the fuel gas.

Conventional SOFCs have been proposed in which a hydrocarbon fuel can be directly reformed, through layering of a reforming reaction layer of identical structure on the fuel electrode surface. However, the purport of the above SOFCs is the use of a reforming reaction layer as a catalyst layer for promoting steam reforming of a hydrocarbon fuel, and nothing is reported regarding the effect that is elicited when using a gaseous hydrogen fuel. No reports are existant on the use of such a functional layer from the viewpoint of enhancing generation efficiency, while the problem of achieving high-efficiency generation in single electrochemical cells, in a medium-to-low-temperature region, has remained unresolved.

However, the present invention has succeeded in realizing an electrochemical cell having enhanced generation efficiency even in a medium-to-low-temperature region, on the basis of the finding of the phenomenon to the effect that electrochemical reactions are promoted, even in a low temperature region, and electrode resistance derived from gas diffusion is reduced at the same time, by providing a functional layer on a fuel electrode surface. The present invention has succeeded also in realizing more effectively an electrochemical cell capable of high-efficiency generation, by utilizing an electrochemical cell having a fuel electrode support-type shape.

In addition to the effect of enhancing electrode reactions, the functional layer of the present invention having a porous structure and promoting electrochemical reactions allows solving the problem of drop in performance, derived from fuel gas diffusion, and that constitutes a problem in electrochemical cells of fuel electrode support type. Design with a high degree of freedom is made possible by the functional layer having a porous structure and promoting electrochemical reactions by virtue of the feature wherein the collector section from the fuel electrode is provided on the cell surface to which air (oxygen) is supplied. An electrochemical reaction system that allows achieving a lower operation temperature, as well as cost reductions, can thus be provided by utilizing the above electrochemical cell.

The configuration of the electrochemical cell used in the present invention will be explained next. In the present embodiment, the functional layer must be a composite made up of a metal element selected from among Ni, Cu, Fe, Sn, Pt, Pd, Au, Ru, Co, La, Sr, Ti, Ce, Al, Mg, Ca, Zr, Yb, Y, Sc, Si, W, V, Ti and Mo and/or an oxide compound that contains one or more of these elements.

The functional layer must permit passage of the fuel gas and steam and the like generated after reactions, and hence the functional layer must have a porous structure. The functional layer has suitably a porous structure having a porosity of 10% or greater, preferably of 30% or greater. That is because if the porosity is 10% or smaller, the permeating gas speed becomes a rate-limiting factor of cell generation performance, and high-efficiency operation becomes difficult.

In a suitable example, in particular, the functional layer having a porous structure, promoting electrochemical reactions and layered on the fuel electrode face having an interface with the fuel gas is specifically for instance Ru-supporting $CeO_2$, as a combination of ruthenium (Ru) and ceria ($CeO_2$), or Pd-supporting $CeO_2$, Cu-supporting $CeO_2$, or Ni-supporting $CeO_2$. As is known, $CeO_2$ itself has high catalytic activity, and plays an important role also in the present invention. The supported amount may be determined as appropriate depending on the material that is supported, but sufficient effects are elicited with a supported amount of 1 to 5 wt% in the case of Ru or Pd.

Preferably, the electrolyte material is a material having high ion conduction, and is desirably an oxide compound having at least two elements selected from among Zr, Ce, Mg, Sc, Ti, Al, Y, Ca, Gd, Sm, Ba, La, Sr, Ga, Bi, Nb and W. Suitable examples among the foregoing include, for instance, stabilized zirconia that is stabilized using a stabilizer such as yttria ($Y_2O_3$), calcia (CaO), scandia ($Sc_2O_3$), magnesia (MgO), ytterbia ($Yb_2O_3$), erbia ($Er_2O_3$) or the like, yttria ($Y_2O_3$) or gadolinia ($Gd_2O_3$), or ceria ($CeO_2$) doped with samaria ($Sm_2O_3$) or the like. Preferably, stabilized zirconia is stabilized by one, two or more stabilizers.

Specific suitable examples include, for instance, yttria-stabilized zirconia (YSZ) having 5 to 10 mol% of yttria added thereto as a stabilizer, or gadolinia-doped ceria (GDC) having added thereto 5 to 10 mol% of gadolinia as a dopant. In the case of YSZ, for instance, a content of yttria smaller than 5 mol% is undesirable in that this translates into a drop in oxygen ion conductivity in the anode. Similarly, an yttria content in excess of 10 mol% is undesirable in that this also translates into a drop in oxygen ion conductivity in the anode. The same is true of gadolinia-doped ceria (GDC).

The fuel electrode must be a composite made up of a mixture of an electrolyte material and a metal selected from among Ni, Cu, Fe, Sn, Pt, Pd, Au, Ru, Co, La, Sr and Ti and an oxide and/or an oxide made of at least one of these elements. Specific suitable examples include, for instance, nickel (Ni), copper (Cu) and the like. Among the foregoing, nickel (Ni) can be suitably utilized in that it is widely used and is less expensive than other metals. A composite in which the foregoing elements and oxides are mixed can also be used herein.

In the composite of the above material and electrolyte material, the mixing ratio of the former to the latter ranges from 90:10 wt% to 40:60 wt%. That is because such a mixing ratio makes for a superior balance of electrode activity, electrical resistance and matching of coefficients of thermal expansion; more preferably the mixing ratio ranges from 80:20 wt% to 45:55 wt%.

A suitable material in the air electrode is preferably a material having high oxygen ionization activity, and is, in particular, a material made up of an element from among Ag, La, Sr, Mn, Co, Fe, Sm, Ca, Ba, Ni and Mg, and one or more oxide compounds thereof. Among the foregoing there can be suitably used, for instance, a transition metal perovskite-structure oxide, or a composite of a transition metal perovskite-structure oxide and the electrolyte material.

Using a composite is advantageous in that oxide ions generated in the air electrode migrate readily towards the electrolyte layer, and the electrode activity of the air electrode is enhanced, since oxide ion conductivity is increased from among oxide ion conductivity and electron conductivity, which are the required characteristics of the air electrode. Suitably specific examples of the transition metal perovskite-structure oxide include, for instance, complex oxides such as $LaSrMnO_3$, $LaCaMnO_3$, $LaMgMnO_3$, $LaSrCoO_3$, $LaCaCoO_3$, $LaSrFeO_3$, $LaSrCoFeO_3$, $LaSrNiO_3$, $SmSrCoO_3$ and the like.

As in the case of the fuel electrode material, a composite of the electrolyte material and the above-described transition metal perovskite-structure oxides can be suitably used as the air electrode material. In this case, the mixing ratio between the former and the latter ranges preferably from 90:10 wt% to 60:40 wt%, since such a mixing ratio translates into superior balance in electrode activity, matching of coefficients of thermal expansion and so forth. More preferably, the mixing ratio ranges from 90:10 wt% to 70:30 wt%.

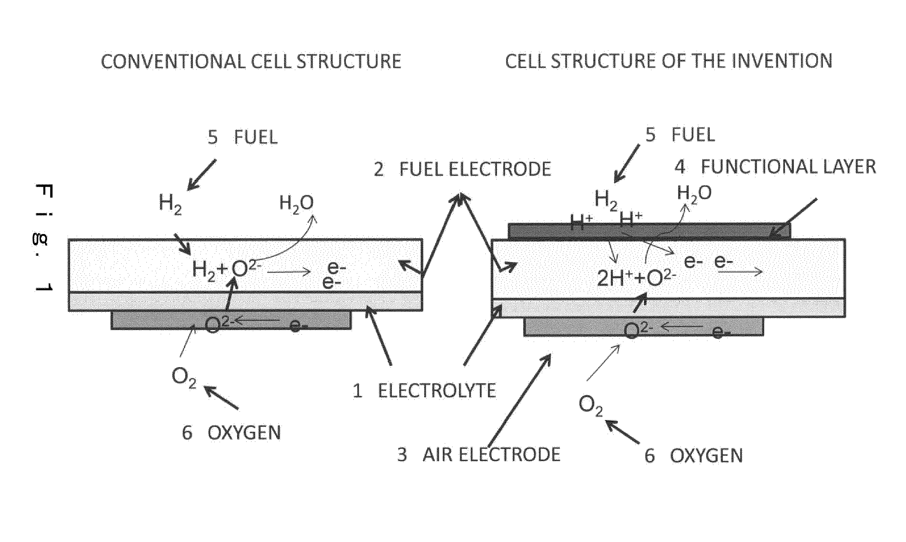

An explanation follows next on an electrochemical cell according to an embodiment of the present invention, and on an electrochemical reaction system made up of the electrochemical cell. The configuration of an electrochemical cell according to the present invention will be explained first. Fig. 1 is a schematic diagram illustrating a conventional cell structure and the cell structure of a plate-type according to the present invention. As illustrated in the cell structure of the present invention in Fig. 1, a dense electrolyte 1 is formed on a fuel electrode 2, as a support made of the abovementioned fuel electrode material, on the side opposite to a fuel supply side.

An air electrode 3 is formed, without coming into contact with the fuel electrode 2, on the surface of the electrolyte. A functional layer 4, optimized or improved for promotion of electrochemical reactions, is layered at a site that constitutes an interface of the fuel electrode 2 and the fuel gas at which the electrolyte 1 is not present, to construct thereby a functional layer-stacked electrochemical cell of novel structure. Power can be generated at a predetermined cell temperature upon supply of fuel 5 to the fuel electrode side and of oxygen 6 to the air electrode side.

The electrolyte 1 is explained next. The thickness of the electrolyte 1 must be established taking into consideration, for instance, the resistivity of the material itself of the electrolyte 1. Preferably, the electrolyte 1 is dense and has a thickness in the range from 0.1 to 50 microns, more preferably, has a thickness of 20 microns or less, in order to suppress electric resistance derived from ion conduction in the electrolyte 1. The thickness of the electrolyte 1 can be easily reduced in cases where the fuel electrode 2 is used as a support.

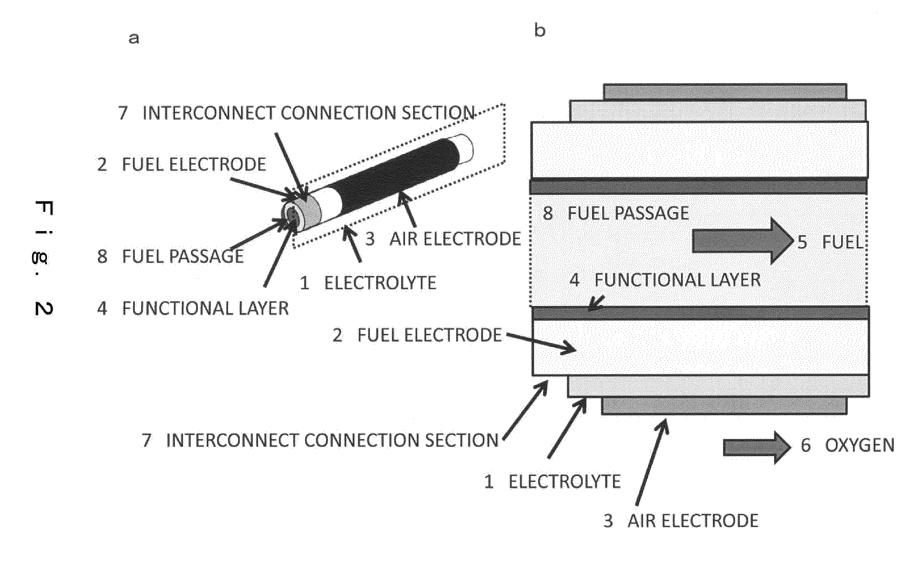

In the electrochemical cell according to the present invention, the thickness of the fuel electrode 2 is suitably 1 mm or smaller, and the porosity is suitably 20% to 30% or greater. The electrochemical cell illustrated in Fig. 2 adopts a tube shape where the cell shape is tubular, but has an electrochemical cell structure identical to that of Fig. 1, and the functional layer 4 can likewise be layered on the surface of the fuel electrode 2. In this case, the interior of the tube shape constitutes a fuel passages 8, while on the outside of the tube there can be provided an interconnect connection section 7 as an exposed portion at which neither the electrolyte 1 nor the electrolyte air electrode 3 is present. Herein, the functional layer can be layered over the entire fuel electrode surface in the tube. The electrochemical cell of the present invention can thus be realized in accordance with a simple production process method in which a slurry or the like is utilized.

In the case where the fuel electrode is used as a tubular support, the tube diameter is preferably 5 mm or smaller. Herein, optimal or suitable anode electrode performance can be obtained by prescribing the tube thickness (i.e. the thickness of the fuel electrode) to be 1 mm or smaller. Further, a tubular structure having a fuel electrode structure of high porosity can be realized, while preserving the strength of the structure even for a tube thickness of 1 mm or smaller, by setting the opening of the tube shape to be 5 mm or less. As ordinary conditions under which the fuel cell is used, a fuel gas containing gaseous hydrogen is supplied into the fuel passages 8, and an oxidizing gas such as oxygen 6 or the like is supplied to the air electrode side, outside the tube.

The size of the plate-type electrochemical cell is not particularly limited, and may be established as appropriate in terms of system size and stack design. The porosity of the fuel electrode must be 10% or greater, and preferably 30% or greater, with a view to promoting gas diffusion and reduction reactions. The porosity of the functional layer 4 is suitably 10% or greater, and preferably 30% or greater. The tube length in the tubular tube-type electrochemical cell is established depending on the electrical conductivity of the fuel electrode 2 and on the performance of the cell. Preferably, the tube length is set in such a manner that electrical resistance in the tube length direction is 10% or less with respect to the electrical resistance [electrolyte resistance+electrode resistance (reaction/gas diffusion)] of the electrochemical cell.

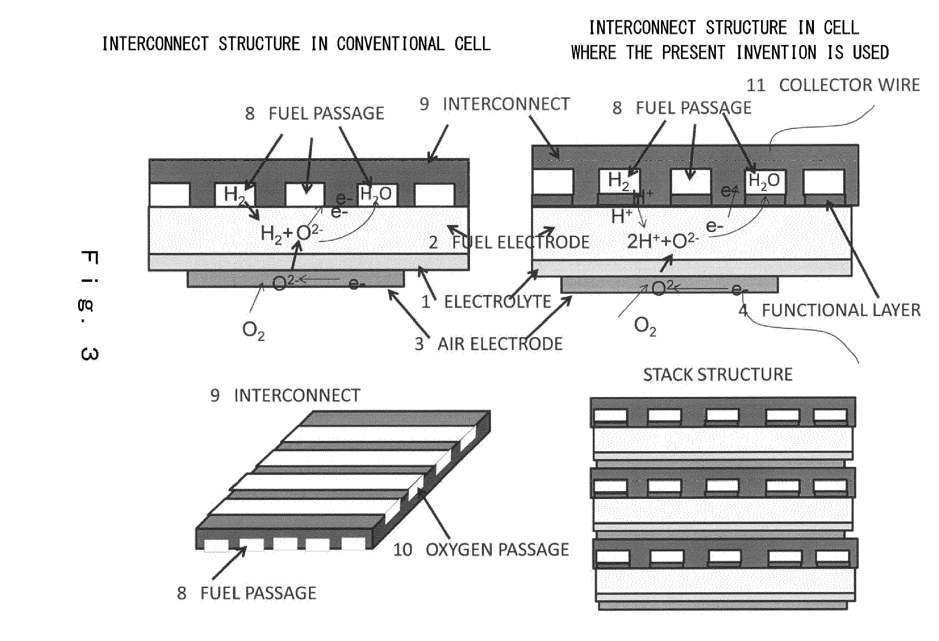

Next, one operation method in which the electrochemical cell according to the present invention operates as an SOFC will be explained. As illustrated in the cell-interconnect structure to which the present invention is applied, in Fig. 3, the fuel electrode 2 is ordinarily connected to an interconnect 9 that constitutes simultaneously fuel passages 8 and air passages (oxygen passages), and is electrically connected to the air electrode 3 of an adjacent electrochemical cell. Therefore, the functional layer 4 is provided on a fuel electrode face that is not in contact with the interconnect 9.

Appropriate materials of the interconnect 9 include conductive ceramics such as lanthanum chromite ($LaCrO_3$), noble metals such as gold, silver or platinum, or a metallic material such as stainless steel or the like. Stainless steel is suitable herein in terms of cost. The interconnect 9 is provided with the fuel passages 8 and oxygen passages 10, and hence stacks can be formed through simple stacking, while securing gas passages for fuel and oxygen at the same time, as illustrated in the stack structure of Fig. 3.

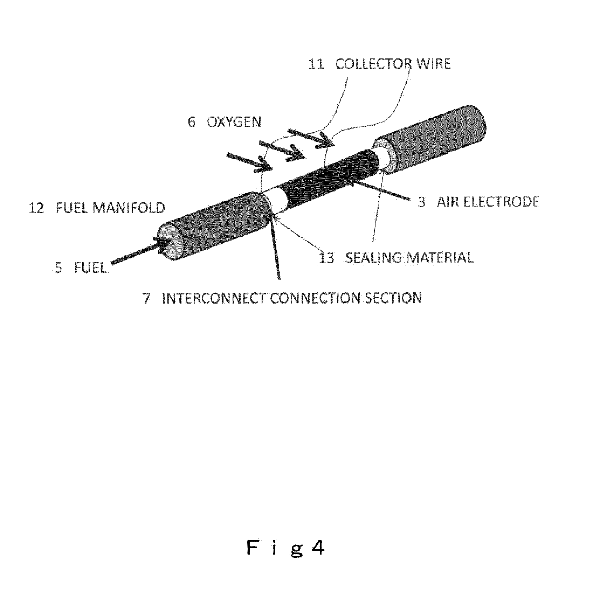

A method for generating power using a tubular tube-type electrochemical cell involves winding a collector wire 11 on the surface of the interconnect connection section 7 and the air electrode 3, arranging a fuel manifold 12 at the ends of the tube-type electrochemical cell, and sealing using a sealing material 13, as illustrated in the diagram of the tubular electrochemical cell upon power generation of Fig 4. The main material that makes up the fuel manifold 12 depends specifically on the operational conditions of the SOFC, but suitable examples thereof include, for instance, heat-resistant stainless steel, ceramics and the like.

The material of the sealing material 13 is not particularly limited so long as it does not allow gases to pass therethrough. However, the material must match the coefficient of thermal expansion of the fuel electrode portion. Specific suitable examples include, for instance, glass that contains silica, boron, barium or the like.

In the plate-type and tubular tube-type electrochemical cells illustrated in Fig. 3 and Fig. 4, power generation is enabled by introducing the fuel 5 that contains gaseous hydrogen to the fuel electrode section, introducing oxygen 6 to the surface of the air electrode 3, and through connection to a load by way of the collector wire 11 and so forth that is attached to the electrodes and the interconnect. The flow rate of the fuel must be determined from the viewpoint of the operating current and fuel utilization. Specifically, a suitable fuel gas flow rate yields a fuel utilization of 80% or greater, and preferably 90% or greater for a given operation current.

Besides, one operation method has been explained in which the electrochemical cell according to the present invention operates as a single-unit SOFC, but the operation method is not particularly limited thereto. The tube-type electrochemical cell according to the present invention can also be integrated in parallel to yield a unit. A power generation device can then be configured by stacking a plurality of these units.

Further, regarding the fuel that is used, the latter must have gaseous hydrogen as a main component. In particular, a fuel gas containing 10% or more of gaseous hydrogen is appropriate herein. A fuel gas containing a substantial amount of gaseous hydrogen can be produced by mixing a hydrocarbon-based fuel such as methane, ethane, propane or butane with steam and/or air, and causing the mixture to pass through a reformer. Therefore, a reformed gas can also be used as the fuel. Except for having a structure wherein the functional layer 4 is layered on the surface of the fuel electrode 2, the electrochemical cell according to the present invention can be used otherwise in exactly the same way as conventional electrochemical cells.

Next, the features and effect of the electrochemical cell according to the present invention will be explained. The characterizing feature of the electrochemical cell according to the present invention is that the functional layer 4, which has the function of promoting electrochemical reactions, is layered at the interface of the fuel electrode 3 to which fuel is supplied.

As a result of painstaking and exhaustive experimentation and studies, the inventors found that the functional layer 4 that is added to the fuel electrode face allows not only promoting effectively electrochemical reactions, but also lowering electrode resistance derived from fuel gas diffusion. As a result, the inventors succeeded in realizing an electrochemical cell in which generation efficiency can reach 40% or more at a single-cell level, in a medium-to-low-temperature region at or below 700°C, and in providing an electrochemical reaction system that allows achieving a lower operation temperature, by utilizing the above electrochemical cell.

Next, a method for producing the electrochemical cell according to the present invention will be explained. The fuel electrode 2 that serves as a support can be produced by sintering. Specifically, a starting material as well as pore-increasing material and so forth are mixed and crushed in a ball mill, the resulting mixture is dried, is then charged in a mold, and is pressed. The electrolyte 1 is formed on one face of the fuel electrode 2, in accordance with various methods such as spraying, printing or the like, and the whole is co-fired at about 1300°C to about 1500°C. The air electrode 3 is then formed on the top face of the electrolyte 1 in accordance with a method such as spraying, printing or the like, and the whole is fired. The porous functional layer 4 that effectively promotes electrochemical reactions is formed, in accordance with the same method as that of the air electrode, on the other face of the fuel electrode 2.

Meanwhile, the method for producing the tubular tube-type electrochemical cell according to the present invention comprises specifically the following steps.

(1) Step of mixing a fuel electrode material, a cellulosic polymer and water, molding a molded body by extrusion molding, and drying or pre-firing the molded body.

(2) Step of coating the obtained molded body with an electrolyte slurry being a mixture of an electrolyte material, an organic polymer and a solvent, and simultaneously firing the fuel electrode structure and the electrolyte at 1200 to 1500°C.

(3) Step of coating the obtained molded body with electrolyte with an air electrode material, and firing at 800 to 1300°C.

(4) Step of layering the functional layer on the inner face of the tubular molded body, and firing at 400 to 1200°C.

In a more detailed explanation, a binder is added to a powder of an oxide compound containing at least two elements selected from among Zr, Ce, Mg, Sc, Ti, Al, Y, Ca, Gd, Sm, Ba, La, Sr, Ga, Bi, Nb and W, and a powder of an oxide or a metal element selected from among Ni, Cu, Pt, Pd, Au, Ru, Co, La, Sr and Ti, the whole is kneaded with water, and the obtained plastic mixture is molded by extrusion molding or the like, to yield a tubular molded body of predetermined tube diameter, tube length and tube thickness.

Herein, is necessary to use a cellulosic organic polymer. Regarding the addition amount of the binder, there is preferably used 5 to 50 g, and suitably 10 to 30 g, of the cellulosic organic polymer, with respect to 100 g of the fuel electrode material. A pore-forming agent such as a carbon powder may be added as needed. The obtained molded body is dried at normal temperature, but may be pre-fired at up to a temperature 1000°C, as needed.

Next, the electrolyte slurry containing the electrolyte material powder is deposited on the obtained molded body, followed by drying. The electrolyte slurry is produced, for instance, through mixing of an electrolyte material powder, an organic polymer, a solvent and the like. The organic polymer that is used is preferably a vinyl-based polymer. A dispersant or the like may be added as needed. An organic compound, for instance, alcohol, acetone, toluene or the like may be used as the solvent. The coating thickness can be controlled by controlling the concentration of the slurry.

The above method allows depositing, on the surface of the tube, the electrolyte-forming layer that constitutes the electrolyte, through subsequent firing. The drying method is not particularly limited, and there can be used appropriate methods and means. A suitable example of a method for depositing the slurry involves, for instance, sealing the openings at both ends of the tubular fuel electrode with a resin-based adhesive, followed by dip coating through immersion of the tube in the slurry that contains the electrolyte. Various other deposition methods can be resorted to other than dipping, for instance brush coating, spraying and the like.

Herein, an exposed section onto which the electrolyte slurry is not deposited and at which a fuel electrode portion is in an exposed state, i.e. an interconnect connection section, must be formed at one end of the outer side face of the obtained tubular fuel electrode with electrolyte. The whole is then fired at a predetermined temperature, to yield a tubular fuel electrode with electrolyte. Preferably, the above structure is fired at a firing temperature ranging from about 1200 to 1600°C, but the firing temperature is not limited thereto, and it suffices that the temperature be such that a dense electrolyte is obtained, taking into consideration the material, porosity and so forth of the fuel electrode. The tube length is not particularly limited, and can be established as appropriate in accordance with the stack shape that results from integrating the tubes.

Next, the electrolyte is coated with the air electrode material. An appropriate material herein is made, in particular, of at least one type from among Ag, La, Sr, Mn, Co, Fe, Sm and Ca, and/or an oxide compound of the foregoing. A powder of that material is used to produce an air electrode slurry that contains the air electrode material powder. The air electrode can then be formed on the electrolyte layer in accordance with a method identical to that resorted to in the preparation of the above-described electrolyte slurry.

Next, the obtained tube is fired at a predetermined temperature, to yield a tubular tube-type electrochemical cell. The firing temperature ranges preferably from about 800 to 1200°C, but is not particularly limited, and can be adjusted to various temperatures, taking into consideration, for instance, the type of air electrode material.

Next, the functional layer material is layered on the inner wall of the fuel electrode tube. The functional layer material is a powder made up of at least an element selected from among Ni, Cu, Fe, Sn, Pt, Pd, Au, Ru, Co, La, Sr, Ti, Ce, Al, Mg, Ca, Zr, Yb, Y, Sc, Si, W, V, Ti and Mo and/or an oxide compound that contains one or more of these elements. That powder is used to produce a functional layer slurry containing a functional layer material powder in accordance with the same preparation method as that of the above-described electrolyte slurry.

A homogeneous functional layer can be formed by pouring the functional layer slurry onto the inner wall of the tubular fuel electrode, and by drawing out the remaining slurry using a syringe or the like. The whole is then fired at a temperature from 400 to 1200°C. As a result there can be obtained a tubular electrochemical cell in which the functional layer is bonded to the inner wall face of the tubular fuel electrode and the solid electrolyte layer is bonded to the outer side face of the tubular fuel electrode, and in which the air electrode is layered on the outside of the electrolyte layer.

Besides, the portion of the air electrode or fuel electrode of the obtained tube-type electrochemical cell may be processed, as needed, through surfacing and/or dimensional adjustment. An instance of an production method has been explained above in which a molded body coated with an electrolyte slurry is fired, to produce thereby beforehand a fuel electrode with electrolyte, followed by layering of the air electrode, but the production method is not limited thereto, and may involve producing a tubular fuel electrode, followed by coating of an electrolyte slurry and an air electrode slurry, and simultaneous firing, to produce an electrochemical cell as a result.

In the case where the tubular tube-type electrochemical cells are layered on each other to form a stack, the electrochemical cells are arrayed side by side, so that a common manifold for fuel gas introduction and collection of power can be used for the electrochemical cells. The electrochemical cells can be used in the form of a multilayer stack capable of multi-volt power generation, by being stacked electrically connected to each other in series.

Further, as is known, tubular tube-type electrochemical cells are resistant against thermal shock due to rapid startup, in those cases where the tubular tube-type electrochemical cells make up a stack. Therefore, it becomes possible to realize a stack/module that can be used in various applications, and that enables a low-temperature, high-efficiency generation operation also in small systems.

The present invention elicits the following effects.

(1) An electrochemical cell can be provided in which it is possible to achieve generation efficiency of 40% or more at or below 700°C, the electrochemical cell having a structure in which a functional layer having a porous structure and promoting electrochemical reactions is layered on part or all of a fuel electrode surface that is an interface with a fuel gas.

(2) The functional layer can be layered in accordance with a simple method, which is expected to translate into enhanced performance at low cost.

(3) Generation efficiency as defined in Expression 1 above is dramatically increased at the cell operating temperature in a medium-to-low-temperature region.

(4) The functional layer can be layered on various cell shapes, such as plate types, tubular types and the like. The electrochemical cell can be expected to be developed into various applications.

(5) It becomes possible to provide a compact, high-performance SOFC system, at a lower cost, by achieving higher efficiency and a lower operating temperature at the cell level.

(6) The present invention can be applied to conventional cell structures, and easily allows enhancing the performance of existing SOFC systems.

BRIEF DESCRIPTION OF THE DRAWINGS

Fig. 1 is a schematic diagram of a conventional cell structure and the cell structure of an electrochemical cell in which there is layered a functional layer according to the present invention;

Fig. 2 is a set of a schematic diagram (Fig. 2a), and a cross-sectional diagram (Fig. 2b) thereof, of a tubular electrochemical cell in which there is layered a functional layer according to the present invention;

Fig. 3 is a set of schematic diagrams of a conventional cell-interconnect structure and a cell-interconnect structure (plate type) in which there is layered a functional layer to which the present invention is applied, and of an interconnect and of a stack structure;

Fig. 4 is a schematic diagram of a tubular electrochemical cell during generation;

Fig. 5 is a set of SEM micrographs (Figs. 5a to 5d) of an electrochemical cell having the functional layer of the present invention, produced in Example 1;

Fig. 6 illustrates results of an I-V characteristic evaluation test of electrochemical cells with and without a functional layer, at operating temperatures of 650 and 700°C;

Fig. 7 illustrates results of an impedance characteristic evaluation test of electrochemical cells with and without a functional layer, at operating temperatures of 650 and 700°C;

Fig. 8 illustrates the relationship between fuel utilization and generation efficiency in electrochemical cells with and without a functional layer, at operating temperatures of 650 and 700°C; and

Fig. 9 illustrates the maximum generation density and generation efficiency in electrochemical cells with and without a functional layer, at operating temperatures of 650, 700 and 750°C.

BEST MODE FOR CARRYING OUT THE INVENTION

The present invention will be explained next in more detail on the basis of examples, but the present invention is not limited to any these examples.

Example 1

In the present example an electrochemical cell was produced in accordance with the procedure below. Firstly, nitrocellulose, as a binder, was added to a powder (by Tosoh Corp.) having a composition of NiO (by Wako Corp.), and $ZrO_2$-8 mol% $Y_2O_3$ (YSZ), as a fuel electrode material. The whole was kneaded with water to a clay-like state, and was molded thereafter to a tubular molded body, by extrusion molding. The tube diameter of the obtained tubular molded body was 2.4 mm.

Next, the obtained tubular molded body was cut to a length of 3 cm, and a 5 mm length of the opening at one end was sealed and masked with Teflon (TM) tape. Thereafter, the tube was immersed in a slurry containing a solid electrolyte of a powder composition (by Daiichi Kigenso Kagaku Kogyo) having a composition of $ZrO_2$-10 mol% $Sc_2O_3$ (ScSZ), and was dip-coated with the electrolyte, to yield a tubular molded body with electrolyte.

After electrolyte coating, the Teflon (TM) tape was removed, with 5 mm of the other end of the fuel electrode as the fuel electrode exposed section. The molded body was dried, and was then fired for 2 hours at 1300°C, to yield a fuel electrode molded body with electrolyte. Next, a paste containing $LaSrCoFeO_3$ (by Nippon Ceramics) and $Gd\text{-}CeO_2$ (by Anan Kasei), as an air electrode material, was coated onto the electrolyte layer face, and was dried at 100°C. Thereafter, the whole was dried for 1 hour at 1050°C, to yield an electrochemical cell. This cell was an electrochemical cell without functional layer. The size of the completed electrochemical cell included a length of 3 cm, and an electrolyte length of 2 cm. An air electrode 1 cm long was formed on the central section of the electrolyte. The tube diameter was 1.8 mm.

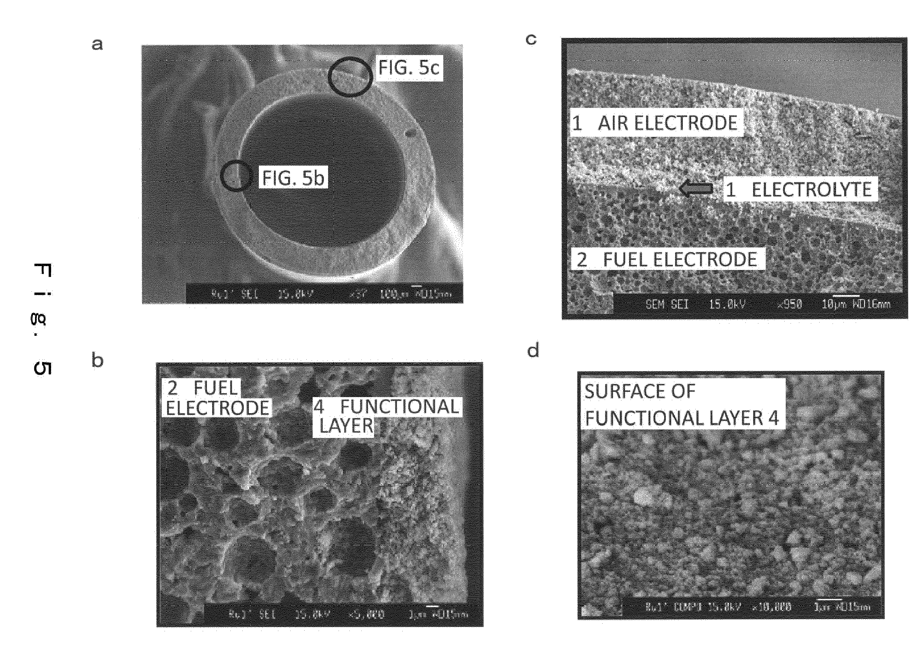

Next, $CeO_2$ (by Daiichi Kigenso Kagaku Kogyo) was mixed with an aqueous solution (by Wako) of ruthenium chloride ($RuCl_2$). The mixture was dried and, thereafter, was fired at 600°C, to produce a $Ru/CeO_2$ powder that constituted the functional layer material. A slurry containing this powder was prepared, and the interior of the tube of the obtained electrochemical cell above was coated with the slurry, followed by firing at 800°C. An electrochemical cell with functional layer was obtained as a result. Fig. 5 (Figs. 5a to 5d) illustrates electron micrographs of the electrochemical cell with functional layer. As illustrated in the figure, the functional layer has a porous structure, and a functional layer of about 10 microns is formed on the inner wall.

Example 2

The electrochemical cells with functional layer and without functional layer produced in Example 1 were connected to the fuel manifold 12 at the interconnect connection section 7, as illustrated in Fig. 4. An Ag wire (collector wire 11) was wound around the fuel electrode exposed section, and was fixed with Ag paste. On the air electrode side, an Ag wire was wound the entire air electrode 3, at a 1 mm pitch, and was fixed with Ag paste. In this test, argon gas containing 20% of gaseous hydrogen, as the fuel 5, was introduced into each electrochemical cell at 17 to 47 cc/min. Meanwhile, 100 cc/min of air were supplied to the air electrode side.

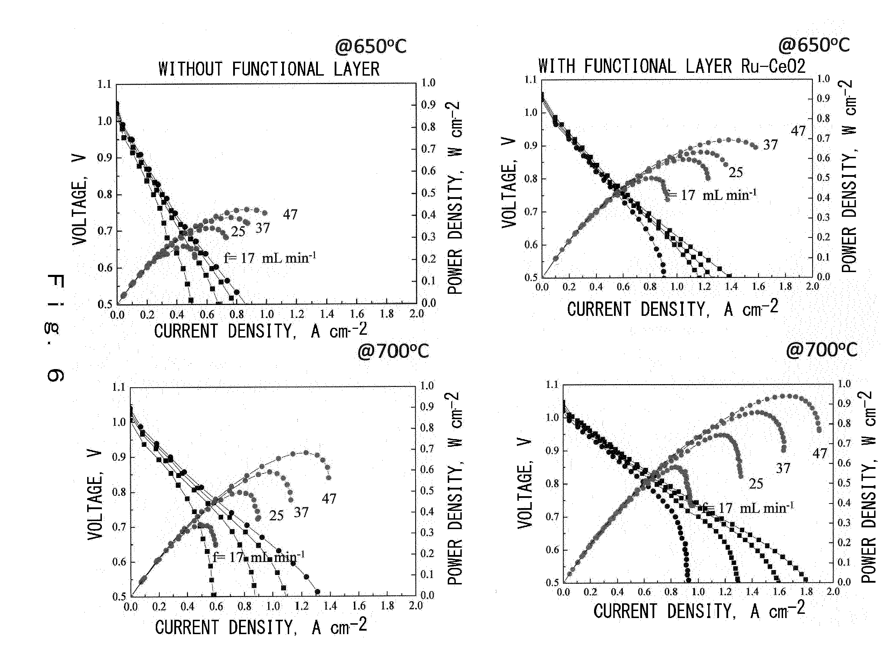

Fig. 6 illustrates the results of a cell generation performance test, at 650°C and 700°C, of the electrochemical cells without functional layer and with functional layer. As the figure shows, the generation performance of the cells varied significantly depending on the fuel flow rate. However, a comparison between the cells with functional layer and without functional layer reveals that the cell with functional layer exhibits enhanced maximum power density, and in particular a pronounced enhancement in performance in a low fuel cell flow region, both at 650°C and 700°C.

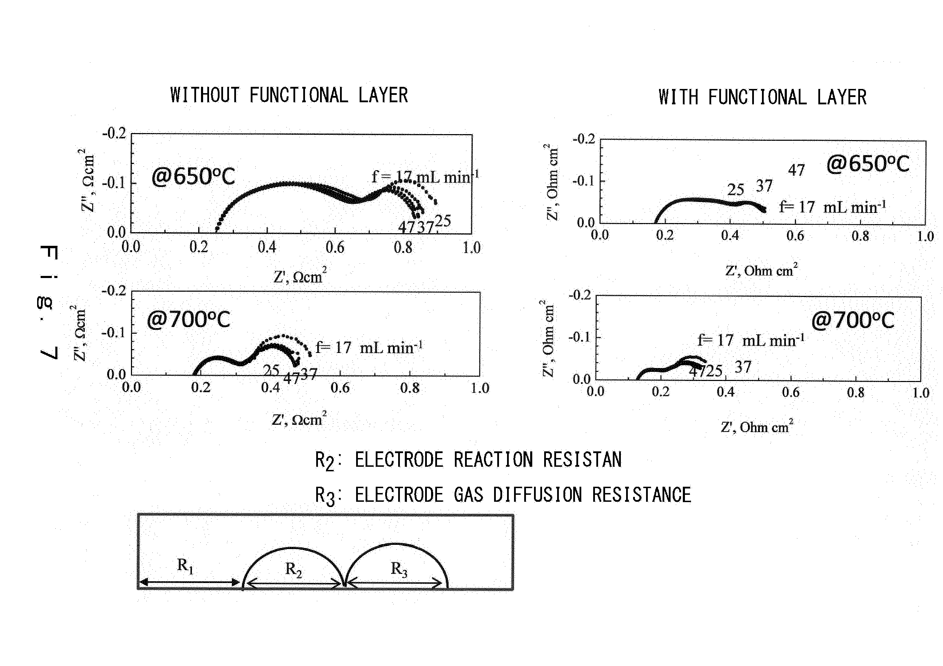

This can be explained on the basis of the impedance measurement results illustrated in Fig. 7. The impedance measurement allows separating electrode resistance into the contribution from electrode reactions and the contribution from gas diffusion. A comparison between cells with and without functional layer reveals that (1) by virtue of the functional layer, the contribution of electrode reactions drops significantly, (2) the contribution by gas diffusion decreases as well, and (3) the dependence on gas flow becomes smaller.

Ordinarily, the prevailing view on electrode reactions is that the latter take place at a three-phase interface (electrolyte, catalyst and gas interface) in the vicinity of the electrolyte inside the fuel electrode. The contribution of the functional layer on the fuel electrode surface to electrode reactions, and the influence of the functional layer on diffusion of the fuel gas, have not been reported to date. These effects of the functional layer constitute thus novel findings.

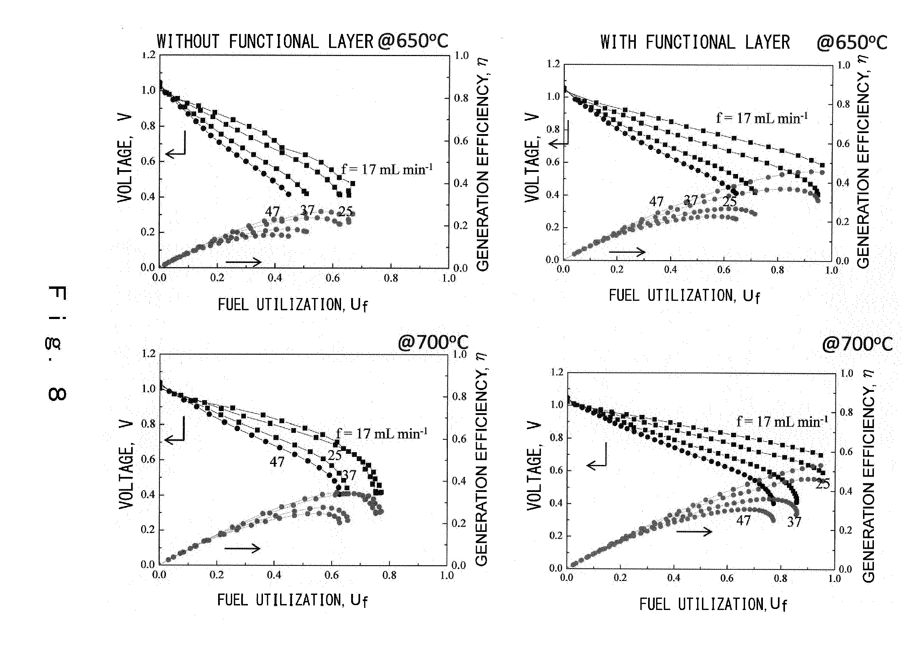

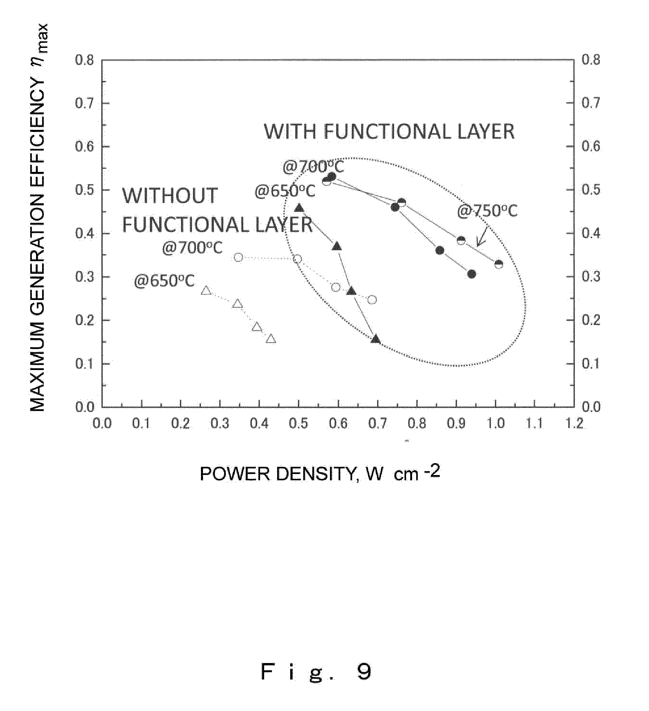

Fig. 8 is a reconstruction of the results of Fig. 6 in the form of a relationship between voltage, generation efficiency and fuel utilization. The figure shows that, from the viewpoint of fuel utilization, high voltage and accordingly high generation density are brought out at times of low fuel gas flow rate. Fig. 9 summarizes the above figures. The result whereby the maximum efficiency of the electrochemical cell having the functional layer according to the present invention is of 40% or more at 650°C and exceeds 50% at 700°C, as compared with the electrochemical cell lacking the functional layer, can be achieved only by virtue of the functional layer. The same test performed at 750°C revealed a slight enhancement of generation density, but efficiency was substantially identical. This suggests that the present invention can be effectively utilized at an operating temperature at or below 700°C.

Embodiments of the present invention have been explained in detail above, but the present invention is not limited in any way to the above embodiments, and may accommodate all manner of variations without departing from the gist of the invention. In the above embodiments, for instance, an example has been explained of a single tubular electrochemical cell. However, a plate-type cell can be produced in accordance with the same procedure, by coating a produced cell with a slurry containing the functional layer material.

INDUSTRIAL APPLICABILITY

As explained in detail above, the present invention relates to an electrochemical cell that is capable of high-efficiency generation, and to an electrochemical reaction system that is made up of the electrochemical cell. The electrochemical cell of the present invention allows  constructing an SOFC in which the operating temperature can be effectively lowered while energy efficiency is increased, and allows using a high-performance SOFC system in a generation system that utilizes gaseous hydrogen fuel. The effect of the present invention can be brought out also in a conventional electrochemical cell structure, merely by adding the functional layer. It becomes thus possible to construct and provide an electrochemical cell having excellent cost performance, and an electrochemical system that utilizes the electrochemical cell. The present invention provides new technologies and products relating to an electrochemical cell of novel type having a functional layer, and relating to an electrochemical reaction system, such as an SOFC or the like, that utilizes the above electrochemical cell.

EXPLANATION OF REFERENCE NUMERALS

(Reference numerals in Figs. 1 to 4)

1  electrolyte
2  fuel electrode
3  air electrode
4  functional layer
5  fuel
6  oxygen
7  interconnect connection section
8  fuel passage
9  interconnect
10  oxygen passage
11  collector wire
12  fuel manifold
13  sealing material

**Claims**

1. An electrochemical cell, which is a single electrochemical cell that utilizes a fuel containing gaseous hydrogen, comprising a structure where a fuel electrode having an interface with the fuel gas, a dense ion conductor (electrolyte) and an air electrode having an interface with air (oxygen) are layered in this order, the fuel electrode and the air electrode are not in contact with each other and are separated by the electrolyte, and a structure where a functional layer having a porous structure and promoting electrochemical reactions is layered on part or all of the fuel electrode surface that is an interface with the fuel gas,
wherein a generation efficiency $\eta$, calculated on the basis of the expression below, of 40% or more can be achieved at a cell temperature of 700°C or below

$$\text{Expression: } \eta = (\text{fuel utilization during operation}) \times (\text{operating voltage } /1.25).$$

2. The electrochemical cell according to claim 1,

wherein the structural shape of the electrochemical cell has a support structure formed of a fuel electrode material;

1) the dense ion conductor (electrolyte) is layered on one face of the fuel electrode structure;
2) the air electrode is layered on the electrolyte, without coming into contact with the fuel electrode structure support; and
3) the functional layer that promotes electrochemical reactions is layered on a face having an interface with the fuel gas, without the electrolyte of the structure support formed of the fuel electrode material being layered.

**3.** The electrochemical cell according to claim 1,
wherein the structural shape of the electrochemical cell has a support structure formed of a fuel electrode material;

1) the dense ion conductor (electrolyte) is layered on one face of the fuel electrode structure;
2) the air electrode is layered on the electrolyte, without coming into contact with the fuel electrode structure support;
3) the functional layer that promotes electrochemical reactions is layered on a face having an interface with the fuel gas, without the electrolyte of the structure support formed of the fuel electrode material being layered; and
4) the electrochemical cell is configured such that an exposed section, at which the electrolyte and air electrode are absent and the fuel electrode is exposed, is present at the face to which air is supplied, and a fuel electrode collector section is provided at the site of the exposed section.

**4.** The electrochemical cell according to claim 1 or 3, wherein the material of the functional layer having a porous structure, promoting electrochemical reactions and layered on a fuel electrode face having an interface with the fuel gas is made up of an element selected from among Ni, Cu, Fe, Sn, Pt, Pd, Au, Ru, Co, La, Sr, Ti, Ce, Al, Mg, Ca, Zr, Yb, Y, Sc, Si, W, V, Ti and Mo and/or an oxide compound containing one or more of these elements.

**5.** The electrochemical cell according to claim 1 or 3, wherein the functional layer having a porous structure, promoting electrochemical reactions and layered on a fuel electrode face having an interface with the fuel gas is made up of $Ru\text{-}CeO_2$, $Pd\text{-}CeO_2$, $Cu\text{-}CeO_2$ or $Ni\text{-}CeO_2$.

**6.** The electrochemical cell according to claim 1 or 3, wherein the electrolyte material is an oxide compound containing two or more elements selected from among Zr, Ce, Mg, Sc, Ti, Al, Y, Ca, Gd, Sm, Ba, La, Sr, Ga, Bi, Nb and W.

**7.** The electrochemical cell according to claim 1 or 3, wherein the fuel electrode material is made up of an element selected from among Ni, Cu, Pt, Pd, Au, Ru, Co, La, Sr and Ti and/or an oxide compound containing one or more of these elements.

**8.** The electrochemical cell according to claim 1 or 3, wherein the fuel electrode material is a composite material of the material according to claim 6 and the material according to claim 7.

**9.** An electrochemical reaction system in which current is extracted as a result of an electrochemical reaction, the electrochemical reaction system comprising, as a constituent element, the electrochemical cell defined in claim 1 or 3, wherein an operating temperature of the electrochemical cell is at most 700°C.

**10.** The electrochemical reaction system according to claim 9, wherein the electrochemical reaction system is formed of a module that utilizes a stack structure in which a plurality of the electrochemical cells is integrated.

**11.** A generation method for generating power by using the electrochemical cell defined in claim 1 or 3, the method comprising the step of generating power using the electrochemical cell under conditions of generation efficiency, as defined according to claim 1, of 40% or more at or below 700°C using a fuel that contains gaseous hydrogen.

CELL STRUCTURE OF THE INVENTION

CONVENTIONAL CELL STRUCTURE

5 FUEL

4 FUNCTIONAL LAYER

$H_2O$

$H_2$ $H^+$

$H^+$

$2H^+ + O^{2-}$ e- e- $\longrightarrow$

$O^{2-}$

$O_2$

e-

6 OXYGEN

5 FUEL

$H_2O$

$H_2 + O^{2-}$ $\longrightarrow$ e- e-

$O^{2-}$

$O_2$

e-

6 OXYGEN

2 FUEL ELECTRODE

1 ELECTROLYTE

3 AIR ELECTRODE

F i g . 1

F i g .   2

INTERCONNECT STRUCTURE IN CONVENTIONAL CELL

INTERCONNECT STRUCTURE IN CELL WHERE THE PRESENT INVENTION IS USED

11 COLLECTOR WIRE

8 FUEL PASSAGE

9 INTERCONNECT

8 FUEL PASSAGE

$H_2$

$H_2O$

e-

e-

$H_2+O^{2-}$

2 FUEL ELECTRODE

$O^{2-}$

e-

$O_2$

1 ELECTROLYTE

3 AIR ELECTRODE

$H_2$

$H^+$

$H^+$

e-

$H_2O$

$2H^++O^{2-}$

e-

$O^{2-}$

e-

$O_2$

4 FUNCTIONAL LAYER

STACK STRUCTURE

9 INTERCONNECT

10 OXYGEN PASSAGE

8 FUEL PASSAGE

Fig. 3

EP 2 693 544 A1

11  COLLECTOR WIRE

6  OXYGEN

12  FUEL MANIFOLD

3  AIR ELECTRODE

5  FUEL

13  SEALING MATERIAL

7  INTERCONNECT CONNECTION SECTION

F i g 4

F i g . 5

Fig. 6

WITHOUT FUNCTIONAL LAYER

WITH FUNCTIONAL LAYER

Fig. 7

$R_2$: ELECTRODE REACTION RESISTAN

$R_3$: ELECTRODE GAS DIFFUSION RESISTANCE

F i g . 8

F i g . 9

**INTERNATIONAL SEARCH REPORT**

| International application No. |
| --- |
| PCT/JP2012/057978 |

A. CLASSIFICATION OF SUBJECT MATTER
*H01M4/86*(2006.01)i, *C04B35/00*(2006.01)i, *C04B41/85*(2006.01)i, *H01M8/02* (2006.01)i, *H01M8/12*(2006.01)i

According to International Patent Classification (IPC) or to both national classification and IPC

B. FIELDS SEARCHED

Minimum documentation searched (classification system followed by classification symbols)
H01M4/86-4/98, H01M8/00-8/24, C04B35/00, C04B41/85

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2003-346864 A  (Japan Science and Technology Corp.), 05 December 2003 (05.12.2003), claims 1 to 2; paragraphs [0001], [0006] to [0008], [0013] to [0026]; fig. 1 to 3 (Family: none) | 1-11 |
| Y | JP 2-262260 A  (Westinghouse Electric Corp.), 25 October 1990 (25.10.1990), page 4, lower right column, line 7 to page 5, lower left column, line 20; fig. 1 & US 5021304 A | 1-11 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 25 June, 2012 (25.06.12) | Date of mailing of the international search report 03 July, 2012 (03.07.12) |
| --- | --- |
| Name and mailing address of the ISA/ Japanese Patent Office | Authorized officer |
| Facsimile No. | Telephone No. |

Form PCT/ISA/210 (second sheet) (July 2009)

22

**INTERNATIONAL SEARCH REPORT**

| | International application No. |
|---|---|
| | PCT/JP2012/057978 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 62-281271 A  (Westinghouse Electric Corp.),<br>07 December 1987 (07.12.1987),<br>page 5, lower right column, line 14 to page 6,<br>lower left column, line 16; fig. 3<br>& US 4702971 A          & US 4812329 A<br>& US 4702971 A          & EP 0253459 A2 | 1-4,6-11 |
| Y | JP 10-021931 A  (Kyocera Corp.),<br>23 January 1998 (23.01.1998),<br>claims 1 to 3; paragraphs [0008] to [0010],<br>[0013]; table 1; fig. 3<br>(Family: none) | 1-11 |
| Y | JP 7-057746 A  (Fujikura Ltd.),<br>03 March 1995 (03.03.1995),<br>paragraphs [0009] to [0016]; fig. 1<br>(Family: none) | 1-11 |
| Y | JP 8-213029 A  (Fujikura Ltd.),<br>20 August 1996 (20.08.1996),<br>paragraphs [0023] to [0029]; fig. 2<br>(Family: none) | 1-11 |
| Y | JP 2007-103217 A  (National Institute of<br>Advanced Industrial Science and Technology),<br>19 April 2007 (19.04.2007),<br>paragraphs [0032], [0035]; fig. 1, 3<br>(Family: none) | 3 |
| X<br>Y | JP 2011-507161 A  (Nextech Materials, Ltd.),<br>03 March 2011 (03.03.2011),<br>paragraphs [0034] to [0040], [0122] to [0123];<br>fig. 7, 22<br>& US 2009/0148743 A1      & EP 2231553 A1<br>& WO 2009/076305 A1 | 1,4,6-11<br>5 |
| X<br>Y | JP 2009-016109 A  (The Tokyo Electric Power<br>Co., Inc.),<br>22 January 2009 (22.01.2009),<br>claims 1 to 7; paragraphs [0004] to [0012],<br>[0059] to [0060], [0084]; fig. 1 to 3<br>(Family: none) | 1,4,6-11<br>5 |
| Y | JP 2010-153273 A  (Mitsubishi Heavy Industries,<br>Ltd.),<br>08 July 2010 (08.07.2010),<br>paragraphs [0050] to [0051]<br>(Family: none) | 5 |
| A | JP 2011-014461 A  (Nissan Motor Co., Ltd.),<br>20 January 2011 (20.01.2011),<br>entire text<br>(Family: none) | 1-11 |

Form PCT/ISA/210 (continuation of second sheet) (July 2009)

**INTERNATIONAL SEARCH REPORT**

International application No.

PCT/JP2012/057978

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2004-055326 A  (Toho Gas Co., Ltd.),<br>19 February 2004 (19.02.2004),<br>entire text<br>& US 2004/0072060 A1     & EP 1383195 A2 | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002151106 A

- JP 2009252492 A

**Non-patent literature cited in the description**

- **Z. SHAO ; S. M. HAILE.** *Nature,* 2004, vol. 431, 170-173
- **T. HIBINO ; A. HASHIMOTO ; K. ASANO ; M. YANO ; M. SUZUKI ; M. SANO.** *Electrochem. Solid-Sate Lett.,* 2002, vol. 5 (11), A242-A244

- **T. SUZUKI ; Z. HASAN ; Y. FUNAHASHI ; T. YAMAGUCHI ; Y. FUJISHIRO ; M. AWANO.** *Science,* 2009, vol. 325, 852-855
- **T. SUZUKI ; T. YAMAGUCHI ; K. HAMAMOTO ; Y. FUJISHIRO ; M. AWANO ; N. SAMMES.** *Energy & Environmental Sci,* 2011, vol. 4, 940-943